# FASCICULE DE BREVET EUROPEEN

(11) **EP 1 005 114 B1**
(45) Date de publication et mention de la délivrance du brevet: **02.02.2005**
(21) Numéro de dépôt: 99402776.1
(22) Date de dépôt: 08.11.1999
(51) Int. Cl.: H01R 33/09, B29C 45/14

(54) **Douille pour lampe sans culot, à base cunéiforme**
Steckfassung für eine Keilbasislampe
Wedge-base lamp socket

(30) Priorité: 25.11.1998 FR 9814840
(43) Date de publication de la demande: 31.05.2000
(73) Titulaire: VALEO LIAISONS ELECTRIQUES, 78190 Montigny Le Bretonneux (FR)
(72) Inventeur: Rapary, Olivier, 71100 Chalon sur Saône (FR)
(74) Mandataire: Faber, Jean-Paul

(56) Documents cités:
- EP-A- 0 654 871
- US-A- 3 400 453
- US-A- 4 360 861
- US-A- 4 607 901
- US-A- 4 618 205

## Description

La présente invention se rapporte à la fabrication d'un porte-lampe pour des lampes dites "Wedge base", c'est-à-dire des lampes sans culot avec une extrémité méplate sur chacune des faces de laquelle est replié un conducteur.

Dans les faces méplates sont formées des rainures.

De telles lampes sont utilisées notamment dans l'industrie automobile et se montent dans des porte-lampes comprenant deux pinces élastiques entre lesquelles s'insère l'extrémité méplate, chaque pince étant destinée à être reliée à une source électrique convenable.

Les pinces élastiques sont généralement rapportées sur le porte-lampe qui est réalisé en une matière plastique moulée. Compte tenu de la petite taille de ces portes-lampes et des pinces élastiques, la fixation de ces dernières est délicate.

L'un des buts de la présente invention est de remédier à ces inconvénients.

Le document US-A-4 607 901 décrit une porte-lampe selon le préambule de la revendication 1.

Le porte-lampe, selon l'invention, est défini dans la revendication 1.

Grâce à cette disposition, les parties des pinces élastiques qui ne constituent pas les points de contact électrique sont noyées dans la matière plastique constituant le porte-lampe ce qui facilite la fabrication, la liaison porte-lampe pinces élastiques étant ainsi définitivement assurée.

Suivant un détail constructif optionnel, chaque pince élastique est prolongée du côté opposé au bec par une partie de sertissage d'un conducteur électrique, celle-ci et l'extrémité correspondante du conducteur étant noyées dans le corps. Ainsi, on améliore encore la liaison porte-lampe pinces élastiques.

L'invention vise également un moule selon la revendication 3.

Grâce à cette disposition, les pinces élastiques sont protégées dans les parties externes et internes des becs afin que lesdites pinces restent parfaitement élastiques et que les parties des becs, destinées à coopérer avec les conducteurs de la lampe, soient parfaitement dépourvues de matière plastique.

L'invention va maintenant être décrite avec plus de détails en se référant à un mode de réalisation particulier donné à titre d'exemple seulement et représenté aux dessins annexés, dans lesquels :
Figure 1 est une vue en perspective d'un porte-lampe, selon l'invention.
Figure 2 et figure 3 sont des vues en élévation d'un porte-lampe, selon l'invention.
Figure 4 est une vue en plan de face du porte-lampe des figures 2 et 3.
Figure 5 est une vue en coupe suivant la ligne 5-5 de la figure 1.
Figure 6 est une vue en coupe suivant la ligne 6-6 de la figure 3, le moule étant représenté schématiquement.
Figure 7 est une vue en coupe schématique montrant la position des tiroirs lors du moulage.
Figure 8 montre schématiquement une partie du moule.

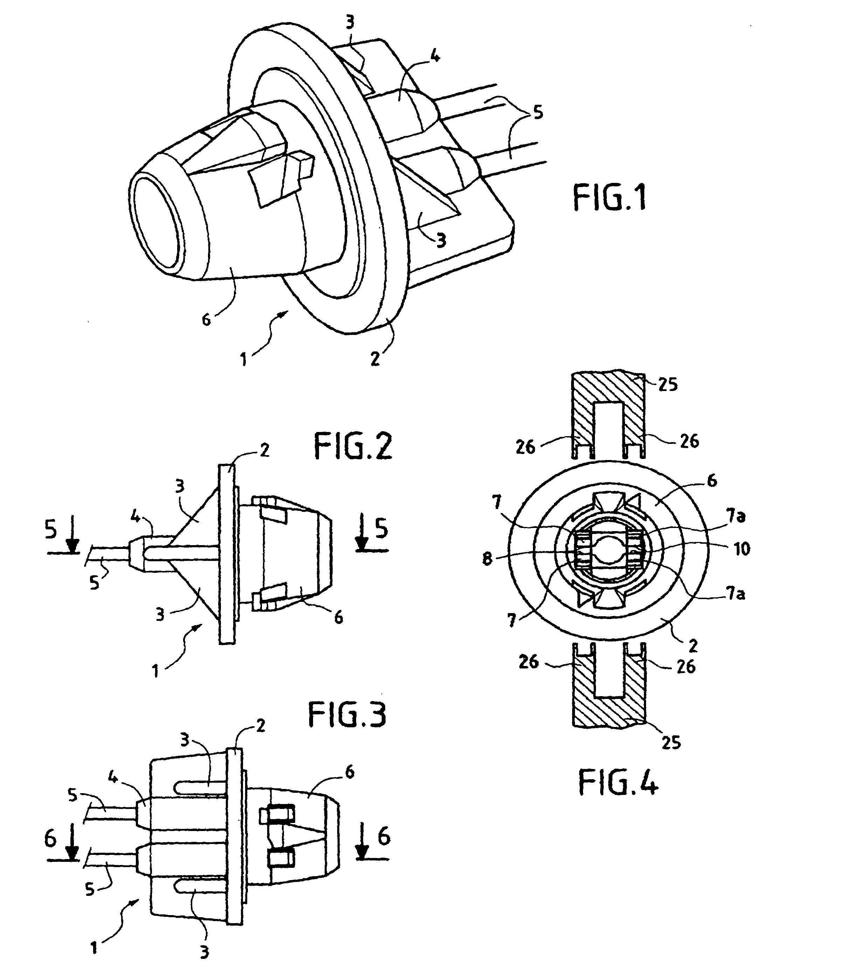

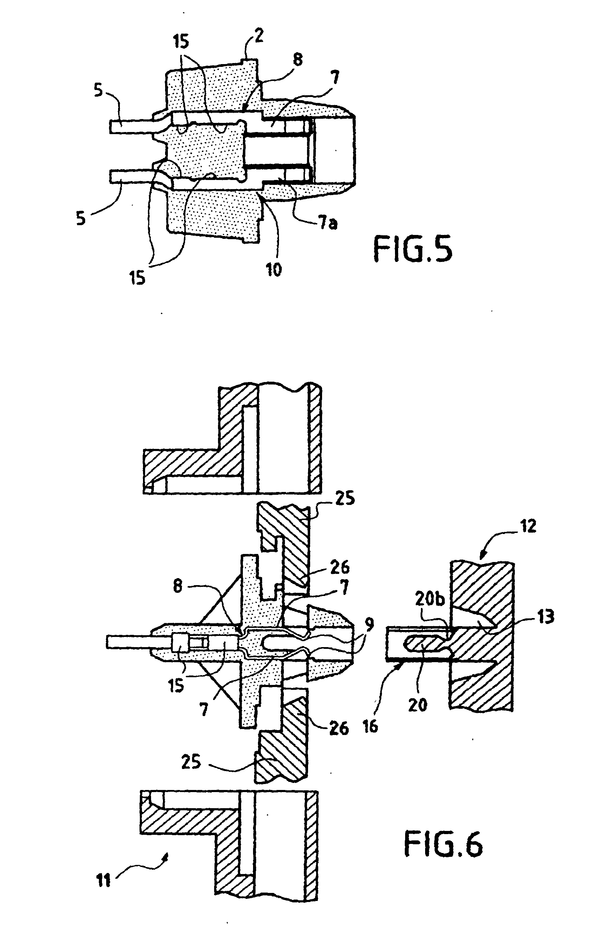

Aux figures 1 à 5, on a représenté un porte-lampe 1 présentant une collerette 2 reliée par des voiles 3 à une extrémité arrière 4 à partir de laquelle s'étendent deux conducteurs 5.

L'extrémité antérieure du porte-lampe présente une douille 6 destinée à recevoir une lampe "Wedge base", c'est-à-dire une lampe sans culot terminée par une partie méplate destinée à s'insérer entre les branches 7 d'une pince élastique 8 et entre les branches 7a d'une seconde pince élastique 10.

Chaque pince élastique 8 et 10 est réalisée à partir d'un flan métallique bon conducteur de l'électricité et doué d'une certaine élasticité, découpé et plié pour présenter, à une extrémité, des pattes de sertissage 15 pour enserrer un conducteur 5, tandis que de l'autre extrémité s'étendent deux branches concaves dont les concavités sont tournées en regard l'une de l'autre, les extrémités libres desdites branches étant pliées en épingle à cheveux pour former deux becs 9 se faisant vis-à-vis et destinés à enserrer la partie méplate de la lampe. Sur une face de cette partie méplate, au voisinage d'une extrémité, s'étend un conducteur et, sur l'autre face, s'étendant au voisinage de l'autre extrémité, un autre conducteur, ceux-ci étant reliés au filament de la lampe.

Les becs 9 forment les organes de contact qui, en coopérant avec les conducteurs de la partie méplate de la lampe, assurent l'alimentation de cette dernière.

Le porte-lampe est obtenu par surmoulage de matière plastique avec un moule comprenant une première empreinte 11 destinée à obtenir l'extrémité arrière, la collerette 2 et une partie de la douille 6.

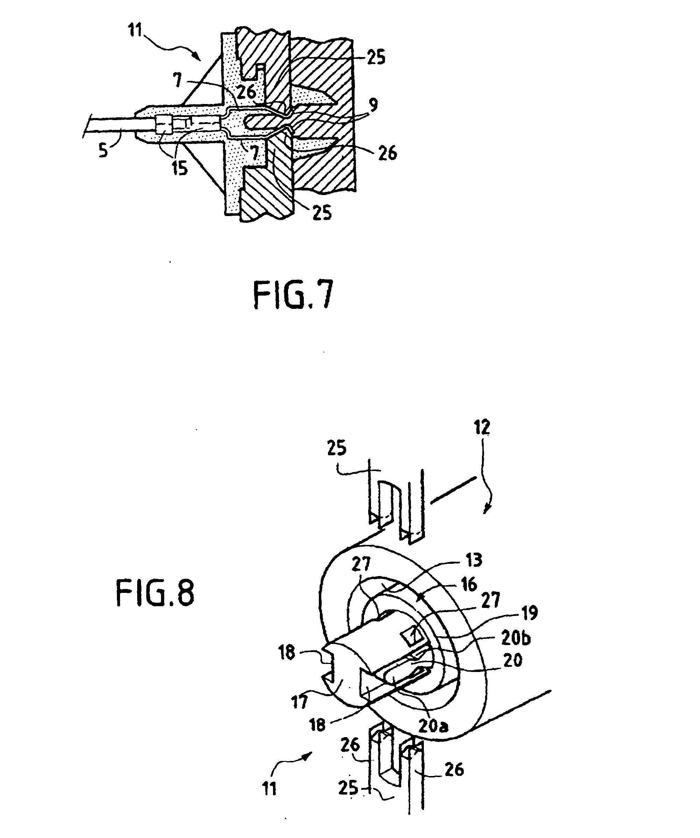

Il est prévu une contre-empreinte 12 comportant un creusage 13 destiné à former l'extrémité libre de la douille 6 et à partir duquel s'étend un noyau 16 (voir figure 8). Ce dernier présente une extrémité cylindrique 17 avec deux entailles 18 et qui est raccordée à une partie de plus grand diamètre 19 correspondant à la formation de l'ouverture de la douille.

Dans chaque entaille 18 est disposé un relief 20 correspondant à la forme interne des pinces élastiques 8 et 10 avec une partie renflée 20a correspondant aux concavités et des parties en creux 20b destinées à recevoir les becs 9.

Dans la première empreinte sont montés mobiles deux tiroirs 25 qui sont chacun terminés par deux doigts 26 destinés à traverser des ouvertures 27 du noyau 16 et à coopérer avec les parties en creux 20b.

Lorsqu'on procède au surmoulage, les organes de contact 8 et 10 avec les conducteurs sertis 5 sont montés sur les reliefs 20, le moule étant fermé les doigts 26 viennent presser les branches 7 et 7a afin que les becs 9 soient fortement appliqués contre les creux 20b. Ainsi, la matière plastique injectée flue dans toutes les cavités, mais les branches 7, 7a sont, dans leurs extrémités libres, protégées extérieurement par les doigts 26 et intérieurement par les parties en creux 20b.

Ainsi, les pinces élastiques 8 et 10 font partie intégrante du porte-lampe tout en gardant l'élasticité des branches, celles-ci étant dans les points de contact exemptes de matière plastique.

Bien entendu, l'invention n'est pas limitée au mode de réalisation qui vient d'être décrit et représenté. On pourra y apporter de nombreuses modifications de détail sans sortir pour cela du cadre de l'invention.

## Revendications

1. Porte-lampe comprenant un corps en matière plastique surmoulée avec, à une extrémité, une douille (6) présentant une ouverture pour l'engagement d'une lampe dite "Wedge base" la lampe comportant une extremité méplate de contact destinée à s'insérer entre les deux branches (7, 7a) de deux pinces élastiques (8, 10) destinées à être reliées à une source de courant électrique convenable, chaque branche présentant une partie concave, les concavités étant tournées en regard l'une de l'autre, les extrémités libres des branches étant terminées par une partie pliée en épingle à cheveux pour former un bec (9), les becs étant tournés l'un en regard de l'autre, **caractérisé en ce que** la partie des branches, opposée au bec, est noyée lors du surmoulage du corps dans la matière plastique formant ce dernier.

2. Porte-lampe, selon la revendication 1, **caractérisé en ce que** chaque pince élastique est prolongée du côté opposé au bec (9) par une partie de sertissage d'un conducteur électrique, celle-ci et l'extrémité correspondante du conducteur étant noyées dans le corps.

3. Moule d'injection pour la fabrication d'un porte-lampe, selon la revendication 1 et ou la revendication 2, comprenant une première partie de moule (11) avec une partie de l'empreinte du porte-lampe et une seconde partie de moule (12) avec la partie complémentaire de l'empreinte, **caractérisé en ce qu'**il comporte dans la deuxième partie du moule (12) un noyau (16) destiné à former l'ouverture d'engagement de la lampe et présentant deux entailles (18) dans lesquelles s'insèrent les pinces élastiques (7, 7a), celles-ci venant épouser des reliefs (20) correspondants desdites entailles, des tiroirs étant prévus dans la première partie du moule (11) et terminés par des doigts (26) traversant des ouvertures (27) du noyau (16) et venant presser les becs (9) contre les reliefs (20) du noyau (16), de tel sorte que la partie des branches, opposée au bec, est noyée lors du surmoulage du corps dans la matière plastique formant ce dernier.

## Patentansprüche

1. Lampenträger mit einem aus Kunststoffwerkstoff geformten Körper mit an einem Ende befindlicher Buchse (6), die eine Öffnung für das Einsetzen einer sogenannten "Keilbasislampe" aufweist, wobei die Lampe ein abgeflachtes Kontaktende aufweist, das zum Einsetzen zwischen die zwei Arme (7, 7a) zweier federnder Klemmen (8, 10) vorgesehen ist, die für die Verbindung mit einer geeigneten elektrischen Stromquelle vorgesehen sind, wobei jeder Arm einen konkaven Teil bildet, die Konkavitäten jeweils einander zugewandt sind, die freien Enden der Arme in einem Teil enden, der haarnadelförmig gebogen ist, um eine Nase (9) zu bilden, und die Nasen jeweils einander zugewandt sind, **dadurch gekennzeichnet, dass** der Teil der Arme, der der Nase entgegengesetzt ist, während des Gießens des Körpers in das den letzteren bildende Kunststoffmaterial eingebettet wird.

2. Lampenträger nach Anspruch 1, **dadurch gekennzeichnet, dass** jede federnde Klemme auf der der Nase (9) entgegengesetzten Seite durch einen Klemmteil für einen elektrischen Leiter verlängert ist, wobei dieser und das entsprechende Ende des Leiters in den Körper eingebettet sind.

3. Spritzgießform zur Herstellung eines Lampenträgers nach Anspruch 1 und/oder Anspruch 2, die einen ersten Formteil (11) mit einem Gießhohlraumteil für den Lampenträger und einen zweiten Formteil (12) mit dem komplementären Gießhohlraumteil aufweist, **dadurch gekennzeichnet, dass** sie im zweiten Formteil (12) einen Kern (16) aufweist, der zur Bildung der Einsetzöffnung der Lampe vorgesehen ist und zwei Einschnitte (18) aufweist, in die die federnden Klemmen (7, 7a) eintreten, wobei diese sich an entsprechende Erhebungen (20) der genannten Einschnitte anpassen, und wobei in dem ersten Formteil (11) Schieber vorgesehen sind, die in Fingern (26) enden, welche Öffnungen (27) des Kernes (16) durchgreifen und die Nasen (9) gegen die Erhebungen (20) des Kernes (16) pressen, dergestalt, dass der der Nase entgegensetzte Teil der Arme während des Gießens des Körpers in das den letzteren bildende Kunststoffmaterial eingebettet wird.

## Claims

1. Lamp holder comprising a body made of moulded plastic with, at one end, a socket (6) having an opening for the engagement of a so-called "wedge-base" lamp, the lamp comprising a flat contact end designed to insert between the two prongs (7, 7a) of two elastic clamps (8, 10) designed to be connected to a suitable source of electricity, each prong having a concave section, the concave sections being formed opposite one another, the free ends of the prongs having a section at the end bent into a hairpin to form a lip (9), the lips being formed opposite one another, **characterised in that** the section of the prongs, at the other end from the lip, is embedded during the moulding of the body in the plastic material forming the latter.

2. Lamp holder according to claim 1, **characterised in that** each elastic clamp is extended at the other end from the lip (9) by a crimping section of an electric conductor, the latter and the corresponding end of the conductor being embedded in the body.

3. Injection mould for the manufacture of a lamp holder, according to claim 1 and/or claim 2, comprising a first mould section (11) with a section for the impression of the lamp holder and a second mould section (12) with the complementary part of the impression, **characterised in that** it comprises in the second mould section (12) a core (16) designed to form the engagement opening of the lamp and having two grooves (18) in which the elastic prongs (7, 7a) engage, the latter conforming to the corresponding contours (20) of said grooves, the plug units being provided in the first mould section (11) and terminated by pins (26) crossing the core (16) openings (27) and pressing the lips (9) against the contours (20) of the core (16), in such a way that the section of the prongs at the other end from the lip is embedded at the time of moulding the body in the plastic material forming the latter.
